(19) Europäisches Patentamt
European Patent Office
Office européen des brevets

(11) **EP 1 911 144 B1**

(12) **FASCICULE DE BREVET EUROPEEN**

(45) Date de publication et mention de la délivrance du brevet:
**04.05.2011 Bulletin 2011/18**

(51) Int Cl.:
**H02N 1/08** *(2006.01)*

(21) Numéro de dépôt: **06778045.2**

(22) Date de dépôt: **28.07.2006**

(86) Numéro de dépôt international:
**PCT/EP2006/064774**

(87) Numéro de publication internationale:
**WO 2007/012663 (01.02.2007 Gazette 2007/05)**

(54) **DISPOSITIF DE CONVERSION D'ENERGIE OPTIMISE**

OPTIMIERTE ENERGIEWANDLEREINRICHTUNG

OPTIMIZED ENERGY CONVERSION DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.07.2005 FR 0552385**

(43) Date de publication de la demande:
**16.04.2008 Bulletin 2008/16**

(73) Titulaire: **Commissariat à l'Énergie Atomique et aux Énergies Alternatives 75015 Paris (FR)**

(72) Inventeurs:
- **CHAILLOUT, Jean-Jacques**
  **F-38960 Saint-Etienne-de-Crossey (FR)**
- **DESPESSE, Ghislain**
  **F-38120 Saint-Egreve (FR)**
- **JAGER, Thomas**
  **F-38000 Grenoble (FR)**

(74) Mandataire: **Poulin, Gérard et al BREVALEX 95 rue d'Amsterdam 75378 Paris Cedex 8 (FR)**

(56) Documents cités:
WO-A-95/10878     WO-A-03/056691
WO-A-03/105167     US-A- 3 107 326
US-A- 4 814 657     US-A- 5 889 389
US-A1- 2004 212 195

- **MENINGER S ET AL: "Vibration-to-electric energy conversion" PROCEEDINGS 1999 INTERNATIONAL SYMPOSIUM ON LOW POWER ELECTRONICS AND DESIGN. (ISLPED). SAN DIEGO, CA, AUG. 16 - 17, 1999, INTERNATIONAL SYMPOSIUM ON LOW POWER ELECTRONICS AND DESIGN, NEW YORK, NY : ACM, US, 16 août 1999 (1999-08-16), pages 48-53, XP010355950 ISBN: 1-58113-133-X cité dans la demande**
- **YASUFUSA TADA: "EXPERIMENTAL CHARACTERISTICS OF ELECTRET GENERATOR, USING POLYMER FILM ELECTRETS" JAPANESE JOURNAL OF APPLIED PHYSICS, JAPAN SOCIETY OF APPLIED PHYSICS, TOKYO, JP, vol. 31, no. 3, 1 mars 1992 (1992-03-01), pages 846-851, XP000323150 ISSN: 0021-4922**
- **BOLAND J ET AL: "Micro electret power generator" PROCEEDINGS OF THE IEEE 16TH. ANNUAL INTERNATIONAL CONFERENCE ON MICROELECTRO MECHANICAL SYSTEMS. MEMS 2003. KYOTO, JAPAN, AN. 19 - 23, 2003, IEEE INTERNATIONAL MICRO ELECTRO MECHANICAL SYSTEMS CONFERENCE, NEW YORK, NY : IEEE, US, vol. CONF. 16, 19 janvier 2003 (2003-01-19), pages 538-541, XP010637028 ISBN: 0-7803-7744-3**
- **SHAD ROUNDY, PAUL K. WRIGHT, KRISTOFER S. J. PISTER: "Micro-electrostatic vibration-to-electricity converters" PROCEEDINGS OF IMECE2002 ASME INTERNATIONAL MECHANICAL ENGINEERING CONGRESS & EXPOSITION, novembre 2002 (2002-11), pages 1-10, XP002376601**

• MITCHESON P D ET AL: "ARCHITECTURES FOR VIBRATION-DRIVEN MICROPOWER GENERATORS" JOURNAL OF MICROELECTROMECHANICAL SYSTEMS, IEEE SERVICE CENTER, PISCATAWAY, NJ, US, vol. 13, no. 3, juin 2004 (2004-06), pages 429-440, XP001200208 ISSN: 1057-7157
• PATENT ABSTRACTS OF JAPAN vol. 007, no. 107 (E-174), 11 mai 1983 (1983-05-11) & JP 58 029379 A (TOUKOU SEIKI SEISAKUSHO:KK), 21 février 1983 (1983-02-21)
• RAJEEVAN AMIRTHARAJAH, ANANTHA P. CHANDRAKASAN: "Self-Powered Signal Processing Uisng Vibration-Based Power Generation" IEEE JOURNAL OF SOLID-STATE CIRCUITS, vol. 33, no. 5, 5 mai 1998 (1998-05-05), pages 687-695, XP002376602
• P D MITCHSEON, T C GREEN, E M YEATMAN, A S HOLMES: "Analysis of Optimized Micro-Generator Architectures for Self-Powered Ubiquitous Computers" PROCEEDINGS UBICOMP 2002, 2002, pages 5-6, XP002376603
• MIYAZAKI M, TANAKA H, ONO G, NAGANO T, OHKUBO N, KAWAHARA T, YANO K: "Electric-Energy Generation Using Variable-Capacitive Resonator for Power-Free LSI: Efficiency Analysis and Fundamental Experiment" PROCEEDINGS OF THE 2003 INTERNATIONAL SYMPOSIUM ON LOW POWER ELECTRONICS AND DESIGN, août 2003 (2003-08), pages 193-198, XP002376604

**Description**

La présente invention a principalement pour objet un condensateur à capacité variable permettant, notamment la conversion d'une énergie mécanique en une énergie électrique et apte à fournir une source d'énergie autonome pour les dispositifs portables.

Il est connu de convertir une énergie mécanique, provenant en général des vibrations de l'environnement extérieur en une énergie électrique en utilisant une variation de capacité entre deux plaques.

Un système de conversion d'énergie de type connu comporte une partie généralement externe solidaire d'un support en mouvement, une partie mobile, généralement interne, effectuant du fait de son inertie un déplacement relatif par rapport à cette partie fixe. Les parties interne et externe comportent des doigts interdigités formant deux à deux des condensateurs à capacité variable. Ce système comporte également une liaison souple entre les parties fixe et mobile afin de permettre leur déplacement relatif et un convertisseur de l'énergie mécanique récupérée sous la forme d'énergie voulue, par exemple électrique.

Lorsque les doigts des peignes se déplacent, la capacité du système varie. Lorsque les peignes reviennent en position d'équilibre, une force électrostatique s'applique, et s'oppose à la force de rappel mécanique qui tend à ramener les peignes en position d'équilibre, c'est-à-dire qui tend à ramener chaque doigt d'un peigne au centre de l'espace défini par deux doigts de l'autre peigne. Il y a alors conversion d'énergie mécanique en énergie électrique par cycle de charges et de décharges électriques sur les peignes du condensateur. Le stockage de la charge peut suivre différents cycles de gestion. Par exemple, un cycle dit à « tension constante » pour lequel c'est la charge qui varie, ou un cycle dit à « charge constante » pour lequel c'est la tension aux bornes du condensateur à capacité variable qui varie au cours du cycle de conversion.

L'efficacité de la conversion de l'énergie mécanique en énergie électrique est maximale quand les forces électrostatique et de rappel mécanique sont comparables en terme d'intensité et de variation. Dans ce cas, l'énergie cinétique de la partie mobile est pratiquement intégralement et instantanément convertie en énergie électrique. La force de rappels mécanique, est traditionnellement proportionnelle au déplacement relatif entre la partie mobile et la partie fixe. De son côté, la force électrostatique est constante pour un fonctionnement à tension constante, et proportionnelle à l'écartement pour un fonctionnement à charge constante.

Or, dans les dispositifs de l'état de la technique, la force électrostatique s'oppose à la force de rappel mécanique. En outre, si la force électrostatique est supérieure à la force de rappel mécanique, les peignes viennent en contact. Il est donc nécessaire de veiller à ce que la force électrostatique soit inférieure à la force de rappel mécanique pour obtenir un système stable.

En outre, l'efficacité théorique de la conversion est encore meilleure, lorsque la variation de la capacité électrique est grande au cours des déplacements de la partie mobile. Puisque la valeur d'un condensateur muni de plaques parallèles est inversement proportionnelle à la distance entre les plaques, la distance séparant les parties fixe et mobile doit être réduite. Cependant les contacts entre les parties mobile et fixe doivent de préférence être évités afin de s'affranchir d'un collage électrostatique pouvant être irréversible, d'une usure mécanique anormale et/ou de la décharge de la capacité variable.

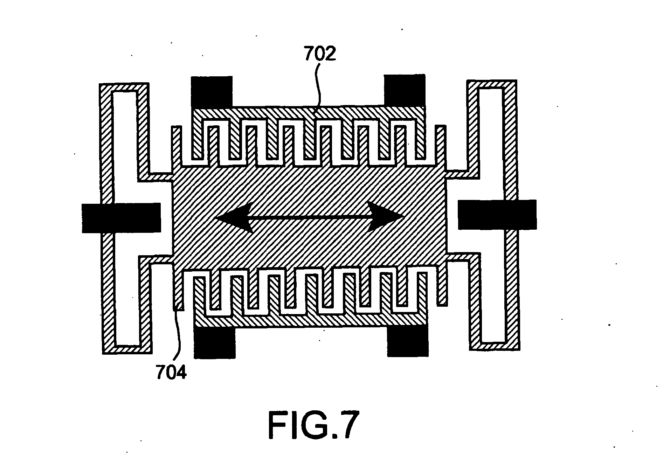

De l'article de Scott Meninger, Jose Oscar Miranda, Rajeevan Amirtharajah, Anantha Chandrakasan et Jeffrey Lang, intitulé « Vibration-to-electric Energy Conversion », IEEE Transactions on Very Larghe Scale Intégration (VLSI) Systems, Vol.9n) 1-2001, est connu un tel convertisseur (Figure 7) muni de peignes interdigités, un premier peigne central mobile 704 et deux deuxièmes peignes fixes 702 de part et d'autre du peigne mobile 704. Les doigts du premier peigne 704 pénètrent respectivement dans un espace délimité par deux doigts d'un des deuxièmes peignes 702.

Les mouvements de ce convertisseur sont limités par la distance entre les doigts. De plus cette distance est grevée d'une distance de sécurité pour prévenir les contacts. Dès que cette amplitude est plus grande que la course autorisée, une partie de l'énergie mécanique est perdue dans le contact entre doigts. Cette distance de sécurité doit être relativement importante pour s'affranchir des imprécisions de réalisation pouvant encore une fois conduire au contact, ce qui diminue d'autant plus la variation de capacité possible et donc l'efficacité de conversion.

En outre, au repos les doigts d'un peigne se trouvent dans une position centrale entre deux doigts de l'autre peigne. Ainsi, dès que l'amplitude du mouvement est faible par rapport à la distance entre deux doigts adjacents d'un même peigne, l'efficacité de conversion décroît fortement car le rapprochement entre les parties fixe et mobile est insuffisant pour créer une variation significative de capacité.

De plus, à chaque déplacement du peigne mobile relativement aux peignes fixes, un seul cycle de charge/décharge de la capacité a lieu. Par conséquent la fréquence électrique obtenue est seulement le double de la fréquence mécanique. Or dans la nature, et dans les appareillages, la majorité des fréquences de vibrations sont inférieures à 100 Hz, la fréquence électrique obtenue est donc trop faible pour permettre une utilisation de l'énergie électrique obtenue dans des systèmes électroniques performant en terme de compacité.

Ce dispositif est, de plus sensible uniquement aux vibrations ayant une composante parallèle à une direction transversale à la direction des doigts.

US4814657 divulgue un dispositif de convention d'énergie comportant une pluralité de capacités variables.

C'est par conséquent un but de la présente invention d'offrir un dispositif de conversion d'énergie permettant d'optimiser la conversion : de l'énergie mécanique, notamment vibratoire en énergie électrique.

C'est également un but de la présente invention d'offrir un dispositif de conversion d'énergie dans lequel les risques de contact des parties mobiles entre elles sont évités.

C'est également un but de la présente invention d'offrir un dispositif de conversion apte à générer une énergie électrique de fréquence utilisable par des systèmes électroniques compacts.

C'est également un but de la présente invention d'offrir un dispositif de conversion d'énergie dans lequel les forces électrostatiques agissent comme force de rappel, comme la force de rappel mécanique.

**EXPOSÉ DE L'INVENTION**

Les buts précédemment énoncés sont atteints par un condensateur à capacité variable comportant des plaques mobiles l'une par rapport à l'autre, chaque plaque comportant des protubérances en saillie d'au moins une face, les plaques étant éloignées l'une de l'autre de manière à ce qu'il n'y ait pas interpénétration des protubérances.

En d'autres termes, dans le cas où toutes les protubérances de chaque plaque sont de la même hauteur, la hauteur étant la distance, séparant une extrémité d'une protubérance solidaire de la plaque d'une extrémité libre de ladite protubérance, cette hauteur est inférieure à la distance séparant l'extrémité de ladite protubérance solidaire de la plaque d'une extrémité libre d'une protubérance de l'autre plaque.

Il se peut aussi que toutes les protubérances ne soient pas de la même hauteur, c'est alors la protubérance ayant la plus grande hauteur qui détermine la distance entre les deux plaques mobiles.

Par conséquent, le mouvement latéral relatif entre les plaques n'est plus limité par la distance séparant deux protubérances d'une même plaque, ce qui évite les risques de contact. De plus, il est possible de rendre minimale la distance entre les extrémités libres de deux protubérances en regard, ce qui permet d'optimiser la variation de capacité électrique et donc d'améliorer la conversion d'énergie mécanique en énergie électrique.

La présente invention a alors principalement pour objet un dispositif à capacité variable comportant au moins une première électrode fixe et une deuxième électrode mobile par rapport à l'électrode fixe, chacune comportant un corps et des protubérances en saillie d'au moins une face dudit corps, chaque électrode étant disposée de manière à ce que les faces de chacune des électrodes munies des protubérances soient en regard, la distance séparant les deux faces en regard étant supérieure à la somme des hauteurs d'une protubérance de l'électrode fixe et d'une protubérance de l'électrode mobile, lesdites électrodes étant aptes à se déplacer l'une par rapport à l'autre dans deux plans parallèles dans au moins une direction principale.

Ainsi, en fonctionnement normal, les contacts entre les protubérances sont évités.

Dans un mode de réalisation avantageux, à l'équilibre chaque protubérance d'une électrode est en regard d'une protubérance de l'autre électrode.

Les dispositifs selon la présente invention peuvent avoir une distance séparant les extrémités de deux protubérances de deux électrodes mobiles adjacentes l'une par rapport à l'autre inférieure à 1 micromètre.

Dans une première variante de réalisation, les protubérances ont une forme de dôme.

Dans une deuxième variante de réalisation, les protubérances ont une forme de tétraèdre.

Dans une troisième variante de réalisation, les protubérances ont une forme de plot sensiblement parallélépipédique.

Dans un premier exemple de réalisation, la première électrode fixe à la forme d'un cadre et la deuxième électrode mobile est disposée à l'intérieur dudit cadre.

L'électrode mobile peut alors être avantageusement de forme allongée et comporter des protubérances sur ses deux faces, le cadre formant électrode fixe comportant des protubérances sur ses faces intérieures en regard des faces de l'électrode mobile.

Dans une deuxième variante de réalisation, le dispositif selon la présente invention peut comporter une première partie fixe portant une pluralité d'électrodes fixes de forme allongée et une partie mobile relativement à la partie fixe portant une multitude d'électrodes mobiles de forme allongée, chaque électrode fixe étant disposée en regard d'une électrode mobile.

De manière avantageuse, les protubérance sont portées par deux faces opposées des électrodes.

La première partie peut alors avoir la forme d'un cadre, les électrodes fixes sont solidaires par une extrémité à une face intérieure d'un premier côté du cadre fixe et des électrodes sont solidaires par une extrémité à une face intérieure d'un deuxième côté du cadre, parallèle au premier côté, et dans lequel la partie mobile a la forme d'un arbre duquel sont solidaires de part et d'autre de cet arbre des électrodes mobiles, les électrodes mobiles s'interposant entre les électrodes fixes.

Les électrodes peuvent s'étendre sous forme de plaque, de manière à réaliser des dispositifs bidirectionnels capables de travailler dans au moins deux directions.

Les protubérances se répartissent avantageusement sous forme de matrice régulière.

Les protubérances peuvent également s'étendre sensiblement longitudinalement sur les plaques de manière à former de poutres parallèles. Les poutres sont alors avantageusement inclinées par rapport aux directions principales de déplacement du peigne mobile.

Dans le dispositif selon le deuxième exemple de réalisation, lorsque les électrodes s'étendent sous forme de plaques et comportent des poutres, les poutres disposées d'un côté de l'arbre ont avantageusement une inclinaison différente de celles disposées de l'autre côté de l'arbre, par exemple ont une disposition symétrique par rapport au plan défini par l'arbre mobile. Ceci permet avantageusement d'éviter d'avoir une direction aveugle pour laquelle la variation de capacité serait faible.

Dans le cas où le dispositif selon la présente invention atteint des dimensions nanométriques, les protubérances peuvent être formées de nanotubes.

**BRÈVE DESCRIPTION DES DESSINS**

La présente invention sera mieux comprise à l'aide de la description qui va suivre et des dessins en annexes sur lesquels :

- la figure 1 est une vue schématique de dessus d'un premier exemple de réalisation d'un condensateur selon la présente invention,
- la figure 2 est une vue en perspective d'un deuxième exemple de réalisation d'un dispositif selon la présente invention,
- la figure 3 est une vue partielle d'un troisième exemple de réalisation d'un condensateur selon la présente invention,
- la figure 4 est une vue de dessus d'un dispositif de conversion d'énergie selon la présente invention comportant plusieurs condensateurs selon la présente invention,
- la figure 5 est une vue en coupe selon un plan orthogonal à l'axe Y d'une variante de réalisation en trois dimensions du dispositif de la figure 4,
- la figure 6A est une représentation schématique des lignes de champs entre deux plaques d'un condensateur,
- la figure 6B est une représentation schématique d'un condensateur muni d'une plaque avec une pointe,
- la figure 7 est vue de dessus d'un condensateur de l'état de la technique.

Pour chaque figure, les axes X, Y, Z sont représentés sous la forme d'un repère orthogonal.

**EXPOSÉ DÉTAILLÉ DE MODES DE RÉALISATION PARTICULIERS**

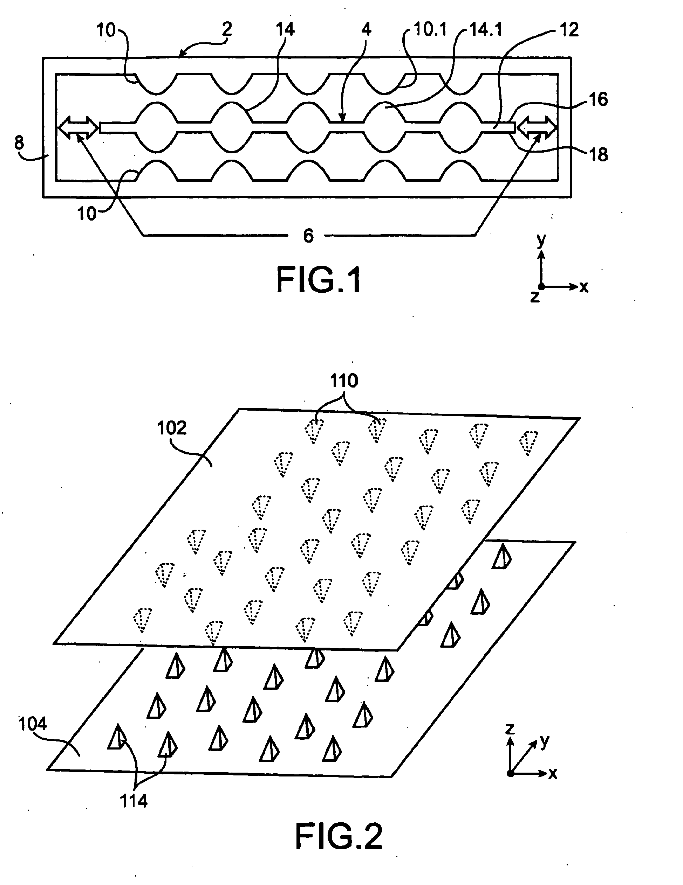

Sur la figure 1, on peut voir un premier exemple de réalisation d'un dispositif selon la présente invention, comportant une première électrode 2 apte à être solidarisée à un élément en mouvement et une deuxième électrode 4 mobile par rapport à l'électrode 2.

L'électrode fixe 2, dans l'exemple représenté, a sensiblement la forme d'un cadre rectangulaire, à l'intérieur duquel est placée l'électrode mobile 4.

L'électrode mobile 4 est raccordée à l'électrode fixe 2 par des moyens de raccord souples 6, par exemple de moyens élastiques, type ressort et schématisés sous la forme de flèche double.

L'électrode fixe 2 comporte un cadre 8 formant une base pour des protubérances 10 en saillie dudit cadre vers l'intérieur.

Dans l'exemple représenté, les protubérances 10 sont disposées sur les faces intérieures des plus grands côtés du rectangle.

L'électrode mobile 4 comporte un corps 12 allongé comportant de part et d'autre des protubérances 14 en saillie des faces principales 16,18 du corps 12.

Dans l'exemple représenté, les protubérances 10,14 ont sensiblement la même forme mais on peut prévoir des protubérances de forme et de taille différentes.

Les protubérances 10,14 ont sensiblement une forme de dôme ou de demi-disque.

L'électrode 4 peut avoir un mouvement oscillatoire autour d'une position d'équilibre principalement dans la direction X. Le condensateur est alors sensible, de manière préférentielle aux mouvements dans la direction X, le condensateur est dit monodirectionnel.

Par exemple, le nombre de protubérances 10 est égal au nombre de protubérances 14 et les protubérances 10,14 sont réparties de manière sensiblement identique, chaque protubérance 10 correspondant alors à une protubérance 14. En outre, de manière avantageuse, au repos une extrémité libre 10.1 d'une protubérance 10 se trouve en regard d'une extrémité libre 14.1 d'une protubérance 14. Ainsi en position d'équilibre, la distance séparant les protubérances, en particulier les extrémités libres 10.1 et 14.1 est minimale; ce qui permet d'optimiser la récupération d'énergie.

En effet, la distance minimale entre deux protubérances 10,14 étant atteinte à chaque mouvement des électrodes 2,4, notamment de l'électrode 4 par rapport à l'électrode 2, quelque soit son amplitude, la récupération d'énergie est favorisée pour les mouvements de faible amplitude. De plus, cette conversion est à chaque fois optimisée puisque la valeur maximale de la capacité, ou distance minimale entre les protubérances est atteinte à chaque mouvement. Dans le cas d'un condensateur classique, cette capacité maximale n'est atteinte que pour des mouvements d'amplitude déterminée, qui est inférieure à la distance entre deux protubérances.

En outre, comme le risque de contact est très faible, un contact ne peut subvenir qu'en cas de mouvement atypique, aucune butée mécanique pour éviter un contact entre les protubérances n'est à prévoir, il est alors possible de rendre très faible la distance minimale entre les extrémités libres de deux protubérances en regard. Ce qui permet d'augmenter, comme cela a été décrit précédemment, de manière sensible l'efficacité de conversion énergétique.

De plus, un condensateur dont la distance entre deux protubérances en regard est très faible, peut fonctionner avec des tensions électriques plus faibles pour une même énergie récupérée.

Cette distance minimale peut être inférieure au micron, par exemple peut atteindre 0,1 $\mu$m. De telles distances présentent également l'avantage de pouvoir utiliser de nouvelles forces, par exemple des forces de Casimir ou de Van des Walls qui apparaissent à cette échelle, ce qui peut accroître encore l'efficacité de la conversion.

De plus, le mouvement d'une électrode par rapport à l'autre n'est plus limité par la distance entre deux protubérances, puisque les protubérances n'ont pas de partie en regard dans le sens de déplacement des électrodes.

Il est alors possible de prévoir que les mouvements d'électrode mobile aient une amplitude supérieure à une distance entre deux protubérances. Ainsi lors d'un mouvement, une extrémité libre de protubérance peut voir plusieurs extrémités libres de protubérances de l'autre électrode. Il est alors possible d'avoir une électrode mobile ayant des déplacements indépendants de la structure du condensateur. La structure selon la présente invention autorise l'électrode mobile à avoir une large gamme de déplacement en terme de fréquence et d'amplitude. Ces déplacements permettent alors d'obtenir, par exemple des fréquences électriques élevées et/ou un taux de conversion élevé.

L'électrode mobile se déplace là la même fréquence que la fréquence d'excitation, mais avec une amplitude supérieure à celle d'un condensateur à doigts interdigités, ce qui engendre une grande variation de capacité et donc améliore l'efficacité de la conversion énergétique.

Ainsi, en optimisant le pas entre deux protubérances, notamment en le choisissant inférieur à l'amplitude de déplacement de l'électrode mobile par rapport à l'électrode fixe, il est possible d'obtenir une fréquence électrique supérieure à la fréquence de vibration à l'origine du mouvements de l'électrode 4.

En effet, il y a conversion de l'énergie mécanique en énergie électrique à chaque fois qu'une protubérance de la partie mobile se trouve en regard d'une protubérance de la partie fixe, qui peut être différente de celle dont elle est en regard au repos. Ainsi la conversion énergétique est répartie sur plusieurs protubérances, la fréquence électrique est alors proportionnelle au nombre de protubérances rencontrées, qui peut être choisi pour obtenir la fréquence électrique désirée.

De plus, le transfert de la charge électrique étant fractionné, la tension électrique de travail du condensateur en est réduite.

L'énergie stockée dans le condensateur est extraite par un circuit d'extraction d'énergie approprié de l'état de la technique, bien connu de l'homme du métier.

Sur la figure 2, on peut voir un condensateur, dit bidirectionnel, c'est-à-dire qu'il est sensille aux mouvements suivant deux directions X et Y. L'électrode 104 peut se déplacer autour d'une position d'équilibre selon la direction X et selon la direction Y.

Dans l'exemple représenté, les électrodes 102,104 ont la forme de plaque et les protubérances 110,114 ont une forme de tétraèdre et sont réparties de manière régulière tant sur l'électrode 102 que sur l'électrode 104, sous forme matricielle.

Cependant, on peut prévoir des protubérances ayant toute autre forme appropriée. De plus les protubérances peuvent être de même taille et de même forme ou de taille et de forme différentes, ce qui est particulièrement avantageux dans le cas où l'on souhaite faire varier le freinage de la partie mobile. En effet, la force électrostatique dépend de la distance entres les protubérances ; si cette distance varie (par des protubérances de hauteurs différentes sur un même électrode) alors la force varie ce qui permet, par exemple d'accroître la force de freinage quand l'amplitude de déplacement augmente.

Leur répartition peut également ne pas être homogène sur toute la surface de l'électrode. Comme pour les protubérances de hauteurs différentes, la répartition non homogène des protubérances peut permettre d'augmenter le freinage de la partie mobile. En effet, il est possible de faire varier la fréquence des cycles de charge/décharge en rapprochant les protubérances des électrodes dans les zones concernées par les grands déplacements.

On peut également prévoir d'avoir un système de conversion comportant plusieurs condensateurs disposés en parallèle, ainsi ceux-ci se répartissent dans des plans parallèles, avec une alternance d'électrodes fixes et d'électrodes mobiles, les électrodes ayant alors de manière avantageuse des protubérances sur leur deux faces principales.

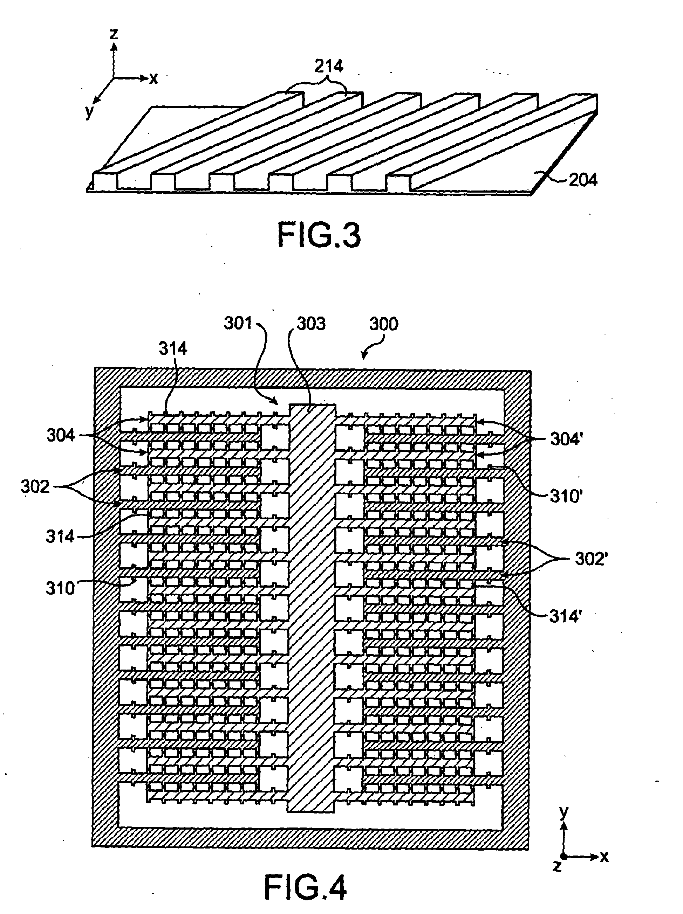

Sur la figure 3, on peut voir un autre exemple de réalisation d'une électrode 204 utilisable dans un condensateur bidirectionnel, dans lequel les protubérances 214 ont une forme de parallélépipède rectangle. Dans l'exemple représenté, les protubérances 210 sont parallèles entre elles, leur axe longitudinal étant avantageusement incliné par rapport aux axes X et Y, formant les directions principales de déplacement, afin d'avoir une variation des surfaces en regard.

Si les protubérances étaient allongées selon la direction Y, une électrode se déplaçant dans la direction Y ne verrait qu'une faible variation de la distance des protubérances en regard.

L'électrode en regard peut avoir une forme identique ou non.

Dans le cas où l'électrode en regard est identique, c'est-à-dire que les protubérances ont la même direction, les protubérances au repos sont avantageusement en regard. Ainsi un mouvement d'une des deux électrodes dans un plan parallèle au plan XY, modifie la valeur de la capacité variable.

Il est même possible d'obtenir un condensateur sensible à trois directions, X, Y et Z, si on permet un déplacement d'au moins un des électrodes selon la direction Z.

Les protubérances peuvent avoir toute autre forme, par exemple à section triangulaire ou en demi-cercle.

Dans un condensateur à capacité variable, la force électrostatique générée par le déplacement relatif des électrodes tend à s'opposer à la force de rappel mécanique du système, exercée par exemple par les ressorts reliant la partie fixe à la partie mobile.

Dans le dispositif selon la présente invention, la force électrostatique générée tend à ramener le dispositif dans son état d'équilibre, comme la force de rappel mécanique. Ainsi les deux forces participent à la stabilité de l'ensemble et à l'amortissement du mouvement des électrodes l'une par rapport à l'autre, ce qui permet d'ajuster la fréquence de résonance.

Il n'est plus alors nécessaire de veiller à ce que la force électrostatique soit inférieure à la force de rappel mécanique.

Il est alors également possible de contrôler les variations de la force électrostatique et/ou de la rendre dépendante de l'amplitude de déplacement de l'électrode mobile par rapport à l'électrode fixe en choisissant une forme des protubérances adaptée qui conduit à une force électrostatique qui croît avec l'amplitude de déplacement et donc, en quelque sorte, à une fréquence de résonance qui augmente également avec l'amplitude.

Le modèle simplifié développé ci-dessous permet de calculer la variation de la force électrostatique ou de la capacité d'un condensateur.

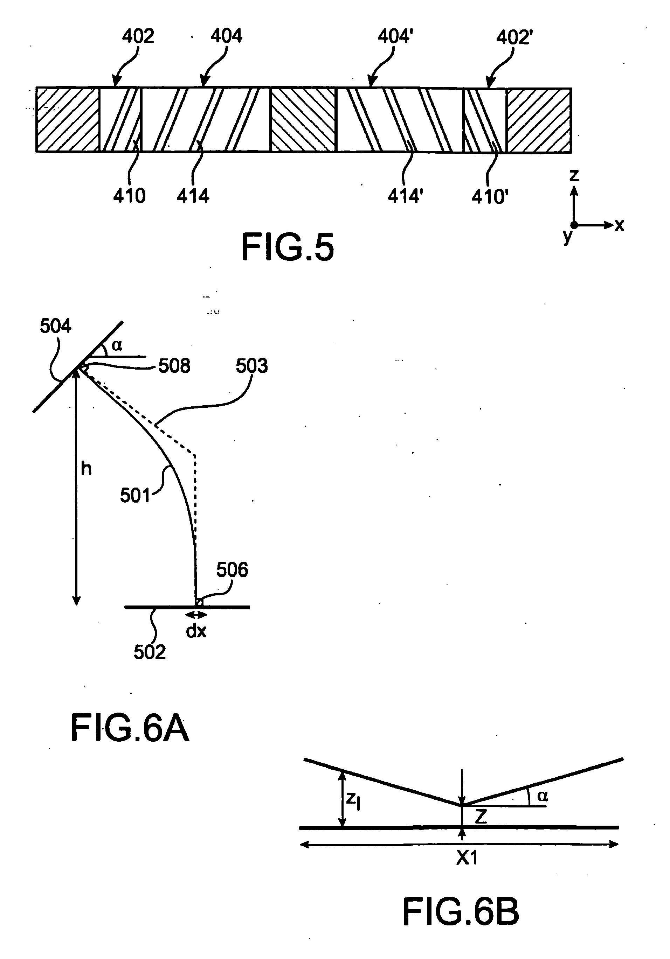

Sur la figure 6A, on a représenté une ligne de champ électrique 501 reliant deux portions de deux plaques conductrices 502,504 formant un angle $\alpha$ entre elles, les portions étant situées loin d'un bord de plaque. Une ligne brisée 503 constituée de deux segments de longueur égale, chacun étant orthogonal à l'une des portions de plaque, est tangente à la ligne de champ 501 aux extrémités 506,508 de la ligne de champ.

La divergence du champ électrique étant nulle entre les plaques, nous supposons que la courbure de la ligne de champ est régulière et donc que la longueur $z_1$ de la ligne brisée 503 constitue une bonne approximation de la longueur de la ligne de champ, h est la distance séparant les deux plaques, prise selon une direction orthogonale à la plaque 502.

$$\text{Ainsi } z_1 = \frac{2h}{1+\cos\alpha} \quad (I)$$

En outre, la capacité différentielle entre ces deux portions de plaque étant inversement proportionnelle à la longueur $z_1$, qui dépend de la position selon l'axe X, la capacité totale entre les deux plaques en est l'intégrale curviligne le long de la plaque 502 :

$$dC = \frac{kdx}{zl(x)} \quad \text{d'où} \quad C = k\int \frac{dx}{z_1(x)}.$$

Toutes les grandeurs k, K sont des coefficients multiplicatifs dont il n'est pas nécessaire de donner l'expression pour la compréhension.

La force électrostatique s'obtient alors en en calculant la dérivée de l'énergie électrostatique pendant un déplacement. Pour simplifier la présentation et sans restreindre le cas général, nous prenons un fonctionnement à charge Q constante du condensateur appliqué à la structure de la figure 6B pour laquelle le déplacement est colinéaire à l'écartement entre les plaques.

La force électrostatique peut alors s'écrire :

$$f_e = \frac{d\left(\dfrac{Q^2}{2C}\right)}{dz} = \frac{Q^2}{2C^2}\frac{d(C)}{dz} = K_e\frac{1}{C^2}\frac{d(C)}{dz} \quad (II)$$

Lorsque les deux plaques sont planes, parallèles et de longueur X1 selon la direction x et espacées d'une distance Z, ce qui constitue une forme habituelle ($\alpha$=0), le modèle développé fournit effectivement une capacité inversement proportionnelle à la distance entre les plaques et une force électrostatique constante,

Dans ce cas, en partant de (I), $z_1$=Z,

$$dC = \frac{kdx}{Z}, \quad donc \quad C = \frac{kX1}{Z}.$$

Pour obtenir $f_e$, on utilise la formule (II) on obtient effectivement $f_e$ constant.

Ce modèle apparaît donc comme représentatif du phénomène physique.

Dans le cas d'un condensateur dont une des plaques comporte une pointe ($\alpha\neq0$) (figure 6B), les calculs donnent successivement :

$z_1$=Z + xtg$\alpha$ (x étant la position de la pointe)

$$C = k\frac{1+\cos\alpha}{2tg\alpha}\ln\left(\frac{Z+X1tg\alpha}{Z}\right) \Rightarrow \frac{d(C)}{dz} = k\frac{1+\cos\alpha}{2Z(Z+X1tg\alpha)}$$

$$f_e = k\frac{4tg\alpha^2}{1+\cos\alpha}\times\frac{1}{2Z(Z+X1tg\alpha)\left[\ln\left(\dfrac{Z+X1tg\alpha}{Z}\right)\right]^2} \quad (III)$$

On constate alors que la force électrostatique n'est plus constante mais décroît avec la distance Z entre les plaques. Par exemple, pour un angle $\alpha$=10° et une longueur X de 200 $\mu$m, la formule (II) donne une force électrostatique divisée par 35 lorsque les plaques s'écartent de 1 $\mu$m à 100 $\mu$m. Le modèle ainsi établi, modélise la force électrostatique dans le cas de déplacements en écartement d'une plaque munie d'une pointe et d'une plaque plane. Ce déplacement est proche, d'un déplacement de deux plaques munies de pointes suivant deux plans parallèles, conformément à la présente invention

Cet exemple montre qu'une structuration des plaques du condensateur à capacité variable permet de contrôler les variations de la capacité et de la force électrostatique exercée entre les plaques d'un condensateur. Par exemple, alors qu'à tension constante la structure traditionnelle ne présente pas de variation de la force électrostatique adaptée à la récupération d'énergie, la structuration des faces capacitives permet d'utiliser la force électrostatique pour la récupération d'énergie.

Les condensateurs représentés sur les figures 1 à 3 peuvent être combinés selon une géométrie bidimensionnelle (planaire) ou tridimensionnelle.

Sur la figure 4, on peut avoir un exemple de dispositif de récupération d'énergie associant une pluralité de condensateurs selon la présente invention.

Le dispositif comporte une partie extérieure 300 formant cadre fixe et une partie intérieure 301 apte à se déplacer par rapport au cadre 300.

Le cadre 300 comporte une pluralité de premiers électrodes 302 parallèles et solidaires par une extrémité longitudinale à un premier plus grand côté du cadre 300 et une pluralité de deuxièmes électrodes 302' parallèles et solidaires par une extrémité longitudinale à un deuxième plus grand côté du cadre 300.

Dans l'exemple représenté, les électrodes 302,302' sont perpendiculaires aux plus grands côtés et chaque électrode 302 est alignée avec une électrode 302'. Mais cette configuration n'est pas limitative. Par exemple on peut prévoir des électrodes 302,302' inclinées par rapport aux plus grands côtés et des électrodes 302,302' décalées selon l'axe Y.

La deuxième partie 301 comporte un arbre central 303 duquel partent des électrodes 304,304' sensiblement perpendiculaires à l'axe de l'arbre 303, de part et d'autre du bras. Une électrode 304 est alignée avec une électrode 304', mais cette disposition n'est également pas limitative.

Les électrodes 302,304 sont interdigitées, ainsi que les électrodes 302',304'.

Chaque électrode 302,302',304,304' comporte en saillie comme décrit précédemment en relation avec la figure 1, des protubérances en saillie 310,310',314,314' respectivement.

Les protubérances ont, dans l'exemple représenté une forme de rectangle. De manière avantageuse, en position d'équilibre, chaque protubérance d'une électrode a une protubérance d'une autre électrode en regard, ce qui optimise l'efficacité de récupération d'énergie comme expliqué précédemment.

Des moyens de rappel élastique reliant le cadre 300 et la partie 301 sont prévus (non représentés).

La deuxième partie 301 peut se déplacer principalement selon la direction X.

Ainsi, l'amplitude de déplacement entre les électrodes 302,304 et 302',304' n'est plus limitée par l'espacement des protubérances.

Cette amplitude est désormais limitée par la distance séparant une extrémité d'une électrode 302,302' ave l'arbre 304 et/ou la distance séparant l'extrémité d'une électrode 304,304' avec un plus grand côté du cadre 301. Ces distances sont de l'ordre de plusieurs millimètres, alors que dans un dispositif de l'état de la technique, la distance limitante est de l'ordre d'une centaine de microns.

Comme décrit précédemment en choisissant un pas entre protubérances, inférieur à l'amplitude du mouvement de la partie mobile 301, on obtient une fréquence électrique qui est un multiple de la fréquence d'oscillation mécanique et qui est plus adaptée aux systèmes électroniques optimisés en encombrement.

Le tableau ci-dessous compare les caractéristiques d'un condensateur de l'état de la technique (Figure 7) et le dispositif de récupération d'énergie de la figure 5, ayant le même encombrement spatial.

| | Etat de la technique (Figure 7) | Invention (Figure 5) |
|---|---|---|
| Dimensions extérieures | 8mm×22mm | 8mm×22mm |
| Largeur des protubérances | 26 $\mu$m | 1 $\mu$m |
| Hauteur des protubérances | 1mm | 1mm |
| Epaisseur de la structure en silicium | 400 $\mu$m | 400 $\mu$m |
| Masse en mouvement | 2.1g | 2.1g |
| Amplitude du mouvement | 95 $\mu$m | 300 $\mu$m à 25 Hz |
| Tension maximale | 313V | 10,2V |
| Fréquence électrique | 100 KHz | 3750 KHz |
| Puissance maximale récupérable * : Fréquence mécanique | 63 $\mu$W à 50Hz* | 70 $\mu$W à 25 Hz* |

On peut constater que la fréquence électrique est très supérieure à celle d'un dispositif classique et qu'elle est désormais utilisable par des systèmes électroniques de pilotage plus compacts

De plus la puissance récupérable est sensiblement égale à celle récupérable avec le dispositif selon la présente invention, cependant la tension de charge n'est que de 10, 2V, contre 313V pour un dispositif de l'état de la technique.

Le dispositif de la figure 5 est du type monodirectionnel, cependant il peut être rendu bidirectionnel en prévoyant que les électrodes 302,302',304,304' s'étendent selon l'axe Z, lesdites électrodes comportant une succession de protubérances réparties sur toute la surface de l'électrode s'étendant selon un plan parallèle au plan XZ.

On peut également prévoir d'utiliser des électrodes ayant la structure de l'électrode représentée en figure 3. Les électrodes en regard sont identiques, c'est-à-dire que les protubérances allongées sont orientées dans la même direction inclinée par rapport aux axes X et Z.

Chaque paire de faces d'électrode en regard peut avoir une inclinaison de protubérance différente de celle des autres paires de protubérances des faces d'électrode en regard.

Sur la figure 5, on peut voir une vue en coupe selon un plan orthogonal à l'axe Y d'un dispositif bidirectionnel selon la figure 4.

Dans l'exemple représenté, les protubérances 410,414 des électrodes 402,404 sont symétriques des protubérances 410',414' des électrodes 402',404' par rapport à un plan parallèle au plan YZ, ainsi le dispositif ne comporte pas de direction aveugle de déplacement dans le plan XZ, c'est-à-dire qui soit peu ou pas génératrice d'une variation de capacité.

En effet, dans le cas où tous les protubérances ont une orientation identique déterminée, si la partie mobile 404 se déplace selon cette direction déterminée, ce déplacement provoque une faible variation de capacité, puisque la distance entre les protubérances en regard varie peu.

Or dans le cas de la figure 5, si la partie mobile se déplace selon la direction déterminée, les protubérances de la partie droite sur la figure 5, sont orientés selon une autre direction, ceux-ci par contre provoqueront une variation de capacité importante. La configuration représentée sur la figure 5 engendre une variation de capacité optimale par rapport au déplacement de la partie mobile.

Les protubérances 402,404 et 402',404' peuvent avoir des orientations qui ne sont pas nécessairement symétriques.

La réalisation des électrodes selon la présente invention peut être effectuée, par exemple par usinage, du type électroérosion, fraisage, tournage..., par collage ou report des protubérances sur un substrat, le matériau des protubérances pouvant être le même que celui du substrat ou un autre matériau.

Ces électrodes peuvent également être fabriquées par des procédés microtechnologiques, tels que la croissance de matériaux, la gravure, l'attaque chimique.

De plus lorsque la taille des protubérances est de l'ordre du nanomètre, il est également possible d'utiliser les nanotubes de carbone obtenus par report, croissance ou tout autre type de processus d'obtention pour réaliser les protubérances.

## Revendications

1. Dispositif à capacité variable comportant au moins une première électrode fixe (2,102,202,302,402) et une deuxième électrode mobile (4,104,304,404) par rapport à l'électrode fixe (2,102,202,302,402), chaque électrode comportant un corps conducteur et des protubérances conductrices (10,110,210,310,410,14,114,314,414) en saillie d'au moins une face dudit corps, le corps de chacune des électrodes s'étendant suivant au moins une direction, dite direction principale, chaque électrode étant disposée de manière à ce que les faces de chacune des électrodes munies des protubérances soient en regard, la distance séparant les deux faces en regard étant supérieure à la somme des hauteurs d'une protubérance (10,110,210,310,410) de l'électrode fixe et d'une protubérance (14,114,314,414) de l'électrode mobile, de sorte qu'il n'y ait pas interpénétration des protubérances, l'électrode mobile étant apte à se déplacer au moins le long de ladite direction principale.

2. Dispositif selon la revendication 1, dans lequel à l'équilibre, chaque protubérance d'une électrode est en regard d'une protubérance de l'autre électrode.

3. Dispositif selon la revendication 1 ou 2, dans lequel la distance séparant les extrémités de deux protubérances de deux électrodes adjacentes, mobiles l'une par rapport à l'autre est inférieure à 1 micromètre.

4. Dispositif selon l'une quelconque des revendications 1 à 3, dans lequel les protubérances (10,14) ont une forme de dôme.

5. Dispositif selon l'une quelconque des revendications 1 à 3, dans lequel les protubérances (110,114) ont une forme de tétraèdre.

6. Dispositif selon l'une des revendications 1 à 3, dans lequel les protubérances ont une forme de plot sensiblement parallélépipédique.

7. Dispositif selon l'une quelconque des revendications précédentes, dans lequel la première électrode fixe (2) a la forme d'un cadre et la deuxième électrode mobile (4) est disposée à l'intérieur dudit cadre (2).

8. Dispositif selon la revendication précédente, dans lequel l'électrode mobile (4) est de forme allongée et comporte des protubérances (14) sur ses deux faces, le cadre (2) formant électrode fixe comportant des protubérances sur ses faces intérieures en regard des faces de l'électrode mobile.

9. Dispositif selon l'une quelconque des revendications 1 à 6, comportant une première partie fixe portant une pluralité d'électrodes fixes (302,302') de forme allongée et une partie mobile relativement à la partie fixe portant une multitude d'électrodes mobiles (304, 304') de forme allongée, chaque électrode fixe (302,302') étant disposée en regard d'une électrode mobile (304,304').

**10.** Dispositif selon la revendication précédente, dans lequel les protubérance (310,310' ,314,314') sont portées par deux faces opposées des électrodes (302,302', 304,304').

**11.** Dispositif selon la revendication 9 ou 10, dans lequel la première partie a la forme d'un cadre, les électrodes fixes (302) étant solidaires par une extrémité à une face intérieure d'un premier côté du cadre fixe et les électrodes (302') étant solidaires par une extrémité à une face intérieure d'un deuxième côté du cadre, parallèle au premier côté, et dans lequel la partie mobile a la forme d'un arbre (303) duquel sont solidaires de part et d'autre de cet arbre des électrodes mobiles (304, 304'), les électrodes mobiles (304,304') s'interposant entre les électrodes fixes (302,302').

**12.** Dispositif selon l'une quelconque des revendications précédentes, dans lequel les électrodes (202,402,404) s'étendent sous forme de plaque.

**13.** Dispositif selon la revendication précédente, dans lequel les protubérances se répartissent sous forme de matrice régulière.

**14.** Dispositif selon la revendication 12, dans lequel les protubérances (214',410, 410',414,414') s'étendent sensiblement longitudinalement sur les plaques de manière à former des poutres parallèles.

**15.** Dispositif selon la revendication précédente dans lequel les poutres (214,,410,410', 414,414') sont inclinées par rapport aux directions principales de déplacement de l'électrode mobile.

**16.** Dispositif selon la revendication 14 ou 15 en combinaison avec la revendication 11, dans lequel les poutres (410,141) disposées d'un côté de l'arbre (303) ont une inclinaison différente des poutres (410', 414) disposés de l'autre côté de l'arbre.

**17.** Dispositif selon la revendication précédente, dans lequel les poutres (410,414,410',414') ont une disposition symétrique par rapport au plan défini par l'arbre mobile.

**18.** Dispositif selon l'une quelconque des revendications précédentes, dans lequel les protubérances sont formées de nanotubes.

**Claims**

**1.** Variable capacitance device comprising at least one first fixed electrode (2,102,202,302,402) and a second electrode (4,104 ; 304, 404') free to move with respect to the fixed electrode (2,102,202,302,402), each electrode comprising a conductive body and conductive protuberances (10, 110, 210, 310, 410, 14, 114, 314, 414) projecting from at least one face of said body, the body of each electrode extending along ar least one direction, called main direction, each electrode being arranged such that the faces of each electrode provided with protuberances are facing each other, the distance separating the two faces facing each other being greater than the sum of the heights of a protuberance (10, 110, 210, 310, 410) of the fixed electrode and a protuberance (14, 114, 314, 414) of the mobile electrode, such that the protuberances do not penetrate into each other, the mobile electrode being capable of moving at least along said main direction.

**2.** Device according to claim 1 in which at equilibrium, each protuberance from an electrode is facing a protuberance from the other electrode.

**3.** Device according to claim 1 or 2, in which the distance separating the ends of two protuberances of two mobile electrodes adjacent to each other is less than 1 micrometer.

**4.** Device according to any one of claims 1 to 3, in which the protuberances (10, 14) are dome shaped.

**5.** Device according to any one of claims 1 to 3, in which the protuberances (110, 114) are tetrahedron shaped.

**6.** Device according to any one of claims 1 to 3, in which the protuberances are in the form of an approximately parallelepiped shaped pad.

**7.** Device according to any one of the previous claims, in which the first fixed electrode (2) is shaped like a frame and the second mobile electrode (4) is arranged inside said frame (2).

8. Device according to previous claim, in which the mobile electrode (4) is elongated in shape and comprises protuberances (14) on both its faces, the frame (2) forming the fixed electrode comprising protuberances on its inside faces facing the faces of the mobile electrode.

9. Device according to any one of claims 1 to 6, comprising a first fixed part comprising a plurality of elongated fixed electrodes (302, 302') and a part free to move relative to the fixed part carrying a large number of elongated mobile electrodes (304,304'), each fixed electrode (302,302') being arranged facing a mobile electrode (304,304').

10. Device according to the previous claim, in which the protuberances (310,310' ,314,314') are carried on the two opposite faces of the electrodes (302,302', 304,304').

11. Device according to claim 9 or claim 10, in which the first part is in the form of a frame, the fixed electrodes (302) being fixed at one end to an inner face of a first side of the fixed frame and the electrodes (302') being fixed at one end to an inner face of a second side of the frame parallel to the first side, and in which the mobile part is in the form of a shaft (303) to which mobile electrodes (304,304') are fixed on each side of this shaft, the mobile electrodes (304, 304') being inserted between the fixed electrodes (302, 302').

12. Device according to any one of the previous claims, in which the electrodes (202,402,404) extend in the form of a plate.

13. Device according to the previous claim, in which the protuberances are advantageously distributed in the form of a regular matrix.

14. Device according to claim 12, in which the protuberances (214,,410,410', 414,414') extend on the plates approximately in the longitudinal direction so as to form parallel beams.

15. Device according to the previous claim, in which the beams (214,,410, 410',414,414') are inclined with respect to the main directions of displacement of the mobile electrode.

16. Device according to claim 14 or 15 in combination with claim 11, in which the beams (410, 141) located on one side of the shaft (303) are arranged at an inclination different from the inclination of the beams (410',414') on the other side of the shaft.

17. Device according to the previous claim, in which the beams (410,414',410,414') are symmetric about the plane defined by the mobile shaft.

18. Device according to any one of the previous claims, in which the protuberances are formed from nanotubes.

**Patentansprüche**

1. Einrichtung variabler Kapazität, aufweisend mindestens eine stationäre erste Elektrode (2,102,202,302,402) und eine bezüglich der stationären ersten Elektrode (2,102,202,302,402) bewegliche zweite Elektrode (4,104,304,404), wobei jede Elektrode einen leitenden Körper und leitfähige Vorsprünge (10,110,210,310,410,14,114,314,414) aufweist, die aus mindestens einer Fläche des Körpers vorragen, wobei sich der Körper jeder der Elektroden in mindestens eine Richtung, Hauptrichtung genannt, erstreckt, wobei jede Elektrode derart angeordnet ist, dass sich die mit den Vorsprüngen versehenen Flächen jeder der Elektroden gegenüberliegen, wobei der Abstand, der die sich gegenüberliegenden Flächen trennt, größer ist als die Summe aus der Höhe eines Vorsprungs (10,110,210,310,410) der stationären Elektrode und der Höhe eines Vorsprungs (14,114,314,414) der beweglichen Elektrode, so dass es keine gegenseitige Durchdringung der Vorsprünge gibt, wobei die bewegliche Elektrode mindestens entlang der Hauptrichtung verschiebbar ist.

2. Einrichtung nach Anspruch 1, in welcher im Gleichgewicht jeder Vorsprung einer Elektrode einem Vorsprung der anderen Elektrode gegenüberliegt.

3. Einrichtung nach Anspruch 1 oder 2, in welcher der Abstand, der die Enden zweier Vorsprünge zweier benachbarter, zueinander beweglicher Elektroden trennt, kleiner als 1 Mikrometer ist.

4. Einrichtung nach einem der Ansprüche 1 bis 3, in welcher die Vorsprünge (10,14) eine Kuppelform haben.

5. Einrichtung nach einem der Ansprüche 1 bis 3, in welcher die Vorsprünge (110,114) eine Tetraederform haben.

6. Einrichtung nach einem der Ansprüche 1 bis 3, in welcher die Vorsprünge ungefähr die Form eines Parallelepipeds haben.

7. Einrichtung nach einem der vorstehenden Ansprüche, in welcher die stationäre erste Elektrode (2) die Form eines Rahmens hat und die bewegliche zweite Elektrode (4) innerhalb des Rahmens (2) angeordnet ist.

8. Einrichtung nach dem vorstehenden Anspruch, in welcher die bewegliche Elektrode (4) eine längliche Form hat und Vorsprünge (14) an ihren zwei Flächen aufweist, wobei der die stationäre Elektrode bildende Rahmen (2) Vorsprünge an seinen den Flächen der beweglichen Elektrode gegenüberliegenden Innenflächen aufweist.

9. Einrichtung nach einem der vorstehenden Ansprüche 1 bis 6, aufweisend einen stationären ersten Teil, der mehrere stationäre Elektroden (302,302') länglicher Form trägt, und einen bezüglich des stationären Teils beweglichen Teil, der eine große Anzahl beweglicher Elektroden (304,304') länglicher Form trägt, wobei jede stationäre Elektrode (302,302') gegenüber einer beweglichen Elektrode (304,304') angeordnet ist.

10. Einrichtung nach dem vorstehenden Anspruch, in welcher die Vorsprünge (310,310', 314,314') von zwei Gegenflächen der Elektroden (302,302', 304,304') getragen werden.

11. Einrichtung nach Anspruch 9 oder 10, in welcher der erste Teil die Form eines Rahmens hat, wobei die stationären Elektroden (302) über ein Ende mit einer Innenfläche einer ersten Seite des stationären Rahmens verbunden sind und die Elektroden (302') über ein Ende mit einer Innenfläche einer zur ersten Seite parallelen zweiten Seite des Rahmens verbunden sind, und in welcher der bewegliche Teil die Form eines Baums (303) hat, mit welchem bewegliche Elektroden (304,304') beiderseits dieses Baums verbunden sind, wobei die beweglichen Elektroden (304,304') zwischen den stationären Elektroden (302,302') angeordnet sind.

12. Einrichtung nach einem der vorstehenden Ansprüche, in welcher sich die Elektroden (202,402,404) plattenförmig erstrecken.

13. Einrichtung nach dem vorstehenden Anspruch, in welcher die Vorsprünge in Form einer regelmäßigen Matrix verteilt sind.

14. Einrichtung nach Anspruch 12, in welcher sich die Vorsprünge (214,410,410',414,414') ungefähr in Längsrichtung an den Platten erstrecken, um parallele Balken zu bilden.

15. Einrichtung nach dem vorstehenden Anspruch, in welcher die Balken (214,410,410',414,414') bezüglich der Hauptverschiebungsrichtungen der beweglichen Elektrode geneigt sind.

16. Einrichtung nach Anspruch 14 oder 15 in Kombination mit Anspruch 11, in welcher die an einer Seite des Baums (303) angeordneten Balken (420,141) eine andere Neigung haben als die an der anderen Seite des Baums angeordneten Balken (410,414').

17. Einrichtung nach dem vorstehenden Anspruch, in welcher die Balken (410,414,410',414') eine symmetrische Anordnung bezüglich der durch den beweglichen Baum definierten Ebene haben.

18. Einrichtung nach einem der vorstehenden Ansprüche, in welcher die Vorsprünge aus Nanoröhren gebildet sind.

FIG.1

FIG.2

FIG.3

FIG.4

FIG.5

FIG.6A

FIG.6B

FIG.7

**EP 1 911 144 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4814657 A

**Littérature non-brevet citée dans la description**

- **Scott Meninger ; Jose Oscar Miranda ; Rajeevan Amirtharajah ; Anantha Chandrakasan ; Jeffrey Lang.** Vibration-to-electric Energy Conversion. *IEEE Transactions on Very Larghe Scale Intégration (VL-SI) Systems,* Janvier 2001, vol. 9n